(19) Europäisches Patentamt
European Patent Office
Office européen des brevets

(11) **EP 2 775 341 A1**

(12) **EUROPEAN PATENT APPLICATION**
published in accordance with Art. 153(4) EPC

(43) Date of publication:
**10.09.2014 Bulletin 2014/37**

(51) Int Cl.:
**G02C 7/02** (2006.01)  **B32B 9/00** (2006.01)
**G02B 1/10** (2006.01)  **G02B 5/26** (2006.01)
**G02B 5/28** (2006.01)

(21) Application number: **12845566.4**

(22) Date of filing: **31.10.2012**

(86) International application number:
**PCT/JP2012/078120**

(87) International publication number:
**WO 2013/065715 (10.05.2013 Gazette 2013/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2011 JP 2011239622**
**31.10.2011 JP 2011239626**

(71) Applicant: **HOYA Corporation**
**Tokyo 161-8525 (JP)**

(72) Inventors:
• **KAMURA, Hitoshi**
**Shinjuku-ku, Tokyo 1618525 (JP)**
• **ADACHI, Makoto**
**Shinjuku-ku, Tokyo 1618525 (JP)**
• **OGAWA, Naomi**
**Shinjuku-ku, Tokyo 1618525 (JP)**

(74) Representative: **Beckmann, Claus et al**
**Kraus & Weisert**
**Patentanwälte PartGmbB**
**Thomas-Wimmer-Ring 15**
**80539 München (DE)**

(54) **LENS FOR EYEGLASSES**

(57)     An aspect of the present invention relates to an eyeglass lens comprising a coating through a hardcoat layer over a lens substrate, wherein the coating comprises a laminate structure of adjacent layers in the form of a first vapor deposition layer formed by vapor deposition with a vapor deposition source comprising a main component in the form of $SiO_2$ and a second vapor deposition layer formed by vapor deposition with a vapor deposition source comprising a main component in the form of $Ta_2O_5$ or $ZrO_2$ the first vapor deposition layer has a nanoindentation hardness of equal to or higher than 5.0 GPa and a compressive stress of equal to or lower than 600 MPa, and the second vapor deposition layer has a nanoindentation hardness of equal to or higher than 7.5 GPa and a compressive stress of equal to or lower than 350 MPa.

**Description**

CROSS-REFERENCE TO RELATED APPLICATIONS

This application claims the benefit of priority to Japanese Patent Application No. 2011-239622 filed on October 31,2011 and Japanese Patent Application No. 2011-239626 filed on October 31, 2011, which are expressly incorporated herein by reference in their entirety.

Technical Field

The present invention relates to an eyeglass lens, and more particularly, to an eyeglass lens affording both good durability and a good external appearance.

Background Art

The formation of various functional films on a lens substrate is widely practiced to impart desired functions to an eyeglass lens. A hardcoat layer and an antireflective film are typical examples of functional films of an eyeglass lens. Normally, an antireflective film will be formed through a hardcoat layer over a lens substrate. The antireflective layer is mainly formed as a multilayer vapor deposition film obtained by alternately depositing a high refractive index material and a low refractive index material that have been determined based on the wavelength of the light to be reflected and the refractive index of the film materials (for example, see Japanese Unexamined Patent Publication (KOKAI) Heisei No. 9-265059, which is expressly incorporated herein by reference in its entirety).

Silicon dioxide ($SiO_2$) is an example of a low refractive index material that is mainly employed in multilayer vapor deposition films. However, when a low refractive index layer formed with silicon dioxide as a vapor deposition material is contained in a multilayer vapor deposition film defects in external appearance tend to occur with deformation of the lens substrate in an eyeglass lens when the film hardness of the $SiO_2$ vapor deposition layer is increased by adjusting the film forming conditions and the like to increase durability. That is, when a low refractive index layer formed of silicon dioxide as the vapor deposition material is contained in a multilayer vapor deposition film, it has conventionally been difficult to achieve an eyeglass lens that is both durable and affords a good external appearance.

Summary of the Invention

An aspect of the present invention provides for an eyeglass lens having a vapor deposition layer formed with $SiO_2$ as a vapor deposition material in a multilayer vapor deposition film as well as affording both good durability and a good external appearance.

The present inventors conducted extensive research, resulting in the novel discovery that it was possible to obtain an eyeglass lens affording both good durability and a good external appearance while employing a vapor deposition layer formed by vapor deposition with a vapor deposition source comprising a main component in the form of $Ta_2O_5$ or $ZrO_2$ as a high refractive index layer adjacent to a vapor deposition layer formed by vapor deposition with a vapor deposition source comprising a main component in the form of $SiO_2$, as well as by causing the nanoindentation hardness of each of the two vapor deposition layers to be at or higher than a prescribed value and by causing the compressive stress of each of the two layers to be at or lower than a prescribed value. This was thought to occur because the nanoindentation hardness levels of the two adjacent layers were each at or higher than a prescribed level such that the two layers acted in concert to enhance durability, and the occurrence of defects in external appearance due to stress-strain could be avoided due to the fact that the compressive stress levels of the two adjacent layers were each at or lower than a certain prescribed level, resulting in diminished stress imparted by the multilayer antireflective film to the underlying hardcoat layer and lens substrate.

An aspect of the present invention (referred to as "Aspect A", hereinafter) relates to an eyeglass lens comprising a coating through a hardcoat layer over a lens substrate,
wherein the coating comprises a laminate structure of adjacent layers in the form of a first vapor deposition layer formed by vapor deposition with a vapor deposition source comprising a main component in the form of $SiO_2$ and a second vapor deposition layer formed by vapor deposition with a vapor deposition source comprising a main component in the form of $Ta_2O_5$ or $ZrO_2$;
the first vapor deposition layer has a nanoindentation hardness of equal to or higher than 5.0 GPa and a compressive stress of equal to or lower than 600 MPa; and
the second vapor deposition layer has a nanoindentation hardness of equal to or higher than 7.5 GPa and a compressive stress of equal to or lower than 350 MPa.

In an embodiment, the first and second vapor deposition layers are layers formed by ion-assisted vapor deposition.

In an embodiment, the eyeglass lens further comprises in the coating an electrically conductive vapor deposition layer formed by vapor deposition with a vapor deposition source comprising a main component in the form of an electrically conductive oxide.

By the way, the light entering the eye includes light of various wavelengths. The shorter the wavelength of the light, the greater the tendency of the energy to undergo intense spattering and the greater the burden imparted to the eye. This results in eye fatigue and eye soreness. Accordingly, to prevent the entry into the eye of short wavelength light in the form of ultraviolet radiation, the practice of providing a UV reflective film or a UV absorbing film on the object-side surface of an eyeglass lens has been widely adopted (for example, see Japanese Unexamined Patent Publication (KOKAI) No. 2002-31701 or English language family members US2002/024705A1 and US Patent No. 6,863,397, which are expressly incorporated herein by reference in their entirety).

In recent years, the monitor screens of digital devices have switched from cathode-ray tubes to liquid crystals. Recently, LED liquid crystals have also become widespread. Liquid-crystal monitors, particularly LED liquid-crystal monitors, strongly emit short wavelength light, known as blue light, with a wavelength of 420 nm to 450 nm, which is not far from the wavelength of ultraviolet radiation. Thus, even more than cutting UV radiation, there is a need to develop a countermeasure to blue light to effectively reduce eye fatigue and eye soreness generated in the course of using a personal computer or the like for an extended period.

In an embodiment, the coating in the above eyeglass lens sequentially comprises, from the lens substrate side:

a first layer 25 to 32 nm in thickness, formed by vapor deposition with a vapor deposition source comprising a main component in the form of $SiO_2$;

a second layer 7 to 9 nm in thickness, formed by vapor deposition with a vapor deposition source comprising a main component in the form of $Ta_2O_5$ or $ZrO_2$;

a third layer 360 to 390 nm in thickness, formed by vapor deposition with a vapor deposition source comprising a main component in the form of $SiO_2$;

a fourth layer 10 to 13 nm in thickness, formed by vapor deposition with a vapor deposition source comprising a main component in the form of $Ta_2O_5$ or $ZrO_2$;

a fifth layer 34 to 38 nm in thickness, formed by vapor deposition with a vapor deposition source comprising a main component in the form of $SiO_2$;

a sixth layer 42 to 45 nm in thickness, formed by vapor deposition with a vapor deposition source comprising a main component in the form of $Ta_2O_5$ or $ZrO_2$; and

a seventh layer 110 to 115 nm in thickness, formed by vapor deposition with a vapor deposition source comprising a main component in the form of $SiO_2$.

Since the eyeglass lens having the above multilayer vapor deposition films can reflect blue light, the effect of blue light on the eye can be diminished by reducing the amount of blue light entering the eye through the eyeglass lens.

In an embodiment, the eyeglass lens comprises coatings sequentially comprising the first to seventh layers on an object-side surface and on an eyeball-side surface of the lens substrate, and a reflectance relative to all light rays within 420 to 450 nm wavelength range on an object-side surface and on an eyeball-side surface of the eyeglass lens ranges from 3 to 8 percent.

An aspect of the present invention can provide an eyeglass lens affording a good external appearance and good durability, with a multilayer vapor deposition film comprising a vapor deposition layer formed of $SiO_2$.

Another aspect of the present invention (referred to as "Aspect B", hereinafter) relates to an eyeglass lens comprising a multilayer vapor deposition film directly or indirectly on a lens substrate, wherein the multilayer vapor deposition film sequentially comprises, from the lens substrate side:

a first layer 25 to 32 nm in thickness, formed by vapor deposition with a vapor deposition source comprising a main component in the form of $SiO_2$;

a second layer 7 to 9 nm in thickness, formed by vapor deposition with a vapor deposition source comprising a main component in the form of $Ta_2O_5$ or $ZrO_2$;

a third layer 360 to 390 nm in thickness, formed by vapor deposition with a vapor deposition source comprising a main component in the form of $SiO_2$;

a fourth layer 10 to 13 nm in thickness, formed by vapor deposition with a vapor deposition source comprising a main component in the form of $Ta_2O_5$ or $ZrO_2$;

a fifth layer 34 to 38 nm in thickness, formed by vapor deposition with a vapor deposition source comprising a main component in the form of $SiO_2$;

a sixth layer 42 to 45 nm in thickness, formed by vapor deposition with a vapor deposition source comprising a main component in the form of $Ta_2O_5$ or $ZrO_2$; and

a seventh layer 110 to 115 nm in thickness, formed by vapor deposition with a vapor deposition source comprising a main component in the form of $SiO_2$, as well as

which has a property of reflecting entering light in 420 to 450 nm wavelength range on a lens surface on a side on which the multilayer vapor deposition film is present.

In an embodiment, the eyeglass lens comprises the multilayer vapor deposition film on both the object-side surface and eyeball-side surface of the lens substrate, and the reflectance relative to all light rays within 420 to 450 nm wavelength range on an object-side surface and on an eyeball-side surface of the eyeglass lens ranges from 3 to 8 percent.

By disposing the multilayer vapor deposition film capable of reflecting blue light (also referred to hereinafter as the "blue light-reflecting film") on both sides of the eyeglass lens in this manner, the burden on the eye due to blue light can be more effectively reduced than when the amount of blue light entering the eye of an eyeglass wearer through an eyeglass lens from the object-side surface is reduced to the same level as when disposing a blue light-reflecting film on both surfaces by disposing a blue light-reflecting film on just one surface. The main reasons for this are given below.

The light entering the eye of an eyeglass wearer is not limited to light entering through the object-side surface. Light entering through the eyeball-side surface of the lens from the diagonal rear also enters the eye of the wearer as light reflecting off the eyeball-side surface. The light reflecting off the eyeball-side surface also includes light exiting the lens in the form of light entering from the eyeball side and reflecting back off the object-side surface in addition to light reflecting off the eyeball-side surface. When attempting to reflect most of the blue light off the object-side surface, the higher the blue-light reflectance of the blue light-reflecting film disposed on the object-side surface becomes, the greater the amount of blue light entering through the eyeball-side surface and reflecting back off of the blue light-reflecting film disposed on the object-side surface. As a result, the amount of blue light entering the eye as returning light increases, increasing the burden on the eye. When a blue-light reflecting property exceeding 8 percent of the reflectance is imparted to the eyeball-side surface of the eyeglass lens, the blue light entering on the eyeball side reflects off the eyeball-side surface, and the amount entering the eye of the eyeglass wearer increases, finally placing a major burden on the eye of the eyeglass wearer. Accordingly, rather than imparting a function of reflecting and cutting blue light just on the object-side surface, dispersing thee above function between the object side and eyeball side can further reduce the burden placed on the eye by blue light.

In an embodiment, in the eyeglass lens, the multilayer vapor deposition film can further comprise a vapor deposition film formed by vapor deposition with a vapor deposition source comprising a main component in the form of an electrically conductive oxide. Thus, charging of the lens surface can be prevented and the adhesion of dust and dirt due to static electricity can be prevented.

An aspect of the present invention can prevent or diminish eye fatigue and eye soreness during the use of a personal computer or the like.

[Brief Description of Drawings]

[Fig. 1] Spectral reflectance spectrum at wavelengths 380 to 780 nm on the convex surface side of an eyeglass lens prepared in Example 1-1.

[Fig. 2] Spectral reflectance spectrum at wavelengths 380 to 780 nm on the convex surface side of an eyeglass lens prepared in Example 1-2.

[Fig. 3] Spectral reflectance spectrum at wavelengths 380 to 780 nm on the convex surface side of an eyeglass lens prepared in Example 1-3.

[Fig. 4] Spectral reflectance spectrum at wavelengths 380 to 780 nm on the convex surface side of an eyeglass lens prepared in Example 1-4.

[Fig. 5] Descriptive drawing of film stress measurement method.

[Fig. 6] Descriptive drawing of film stress measurement method.

Modes for carrying out the Invention

An aspect (Aspect A) of the present invention relates to an eyeglass lens comprising a coating through a hardcoat layer over a lens substrate. In the eyeglass lens of the present aspect, the coating comprises a laminate structure of adjacent layers in the form of a first vapor deposition layer formed by vapor deposition with a vapor deposition source comprising a main component in the form of $SiO_2$ and a second vapor deposition layer formed by vapor deposition with a vapor deposition source comprising a main component in the form of $Ta_2O_5$ or $ZrO_2$. The term "adjacent" in the present invention means that two layers are directly in contact, without through another layer. In the eyeglass lens of the present aspect, the nanoindentation hardness of the first vapor deposition layer is equal to or higher than 5.0 GPa and the compressive stress is equal to or lower than 600 MPa. The nanoindentation hardness of the second vapor deposition layer is equal to or higher than 7.5 GPa, and the compressive stress is equal to or lower than 350 MPa. In the first vapor deposition layer and second vapor deposition layer disposed adjacent to each other, when the nanoindentation hardness of the first vapor deposition layer is less than 5.0 GPa or the nanoindentation hardness of the second vapor deposition layer is less than 7.5 GPa, the durability (abrasion resistance) of the coating becomes inadequate and it becomes difficult to obtain an eyeglass lens that is capable of standing up to extended use. Additionally, when the compressive stress of the first vapor deposition layer exceeds 600 MPa or the compressive stress of the second vapor deposition layer exceeds 350 MPa, the distortion (stress-strain) due to stress applied on the hardcoat layer or lens substrate positioned beneath the coating ends up causing external appearance defects in the eyeglass lens. That is, because the adjacently positioned first vapor deposition layer and second vapor deposition layer have the respective nanoindentation hardness and compressive stresses set forth above, it becomes possible to provide an eyeglass lens affording both high durability and a good external appearance.

The present aspect will be described in greater detail below.

The nanoindentation hardness of the first vapor deposition layer is equal to or higher than 5.0 GPa, as set forth above. The higher the nanoindentation hardness of the first vapor deposition layer the better from the perspective of enhancing the durability of the eyeglass lens. When the hardness of the main component, $SiO_2$, and the physical properties of the film that is formed by vapor deposition are taken into account, about 7.0 GPa may be as a practical upper limit. The nanoindentation hardness of the second vapor deposition layer is equal to or higher than 7.5 GPa, as set forth above. In the same manner as above, the higher the better. When the hardness of the main components and the physical properties of the film that is formed by vapor deposition are taken into account, the practical upper limit may be about 8.5 GPa when the main component is $Ta_2O_5$ and about 9.0 GPa in the case of $ZrO_2$. However, it is also possible to form vapor deposition layers having a nanoindentation hardness exceeding the above values by adjusting the film formation conditions and the like.

As stated above, the compressive stress of the first vapor deposition layer is equal to or lower than 600 MPa and the compressive stress of the second vapor deposition layer is equal to or lower than 350 MPa. The lower the better in terms of permitting a reduction in stress-strain in the hardcoat layer and lens substrate. Zero is also possible. When the compressive stress in the first vapor deposition layer formed with $SiO_2$ as the main component is less than 200 MPa, the resistance to abrasion tends to decrease. Thus, the compressive stress of the first vapor deposition layer is desirably equal to or higher than 200 MPa. Additionally, it is possible for the second vapor deposition layer to exhibit no compressive stress, and for the film stress to become tensile stress. However, entry into the region of exhibiting a tensile stress exceeding 200 MPa tends to cause abrasion resistance to decrease. Thus, when tensile stress is exhibited without exhibiting compressive stress, the tensile stress is desirably equal to or lower than 200 MPa.

The first vapor deposition layer set forth above is formed by vapor deposition using a vapor deposition source comprising $SiO_2$ as the main component thereof. The second vapor deposition layer is formed by vapor deposition using a vapor deposition source comprising $Ta_2O_5$ or $ZrO_2$ as the main component. In the present invention, the term "main component" is the component that accounts for the greatest part of the vapor deposition source or vapor deposition layer, normally about 50 mass percent to 100 mass percent of the total, or even about 90 mass percent to 100 mass percent When equal to or more than about 50 mass percent of $SiO_2$ is contained in the vapor deposition source, the vapor deposition layer that is formed will be able to function as a low refractive index layer. When equal to or more than about 50 mass percent of $Ta_2O_5$ or $ZrO_2$ is contained, the vapor deposition layer that is formed will be able to function as a high refractive index layer. The vapor deposition source will sometimes contain trace amounts of impurities that unavoidably mix in. Further, to the extent that the function performed by the main component is not lost, other components such as other inorganic substances and known additive components that play an assisting role in vapor deposition can also be contained. Vapor deposition can be conducted by the ion plating method, plasma CVD method, ion-assisted method, reactive sputtering method, or the like. The ion-assisted method is desirable for obtaining good adhesion. Further, the ion-assisted method is desirable in that it permits film formation at relatively low temperature and in that it is suited to application to plastic lens substrates.

The nanoindentation hardness and compressive stress of the first and second vapor deposition layers can be controlled by means of the vapor deposition conditions. That is, the present invention also provides a method of manufacturing an eyeglass lens comprising a coating through a hardcoat layer over a lens substrate, wherein the coating comprises a laminate structure of adjacent layers in the form of a first vapor deposition layer formed by vapor deposition with a vapor deposition source comprising a main component in the form of $SiO_2$ and a second vapor deposition layer formed by vapor deposition with a vapor deposition source comprising a main component in the form of $Ta_2O_5$ or $ZrO_2$, and which comprises:

forming the first vapor deposition layer under vapor deposition conditions yielding a Nanoindentation hardness of the layer of equal to or higher than 5.0 GPa and a compressive stress of the layer of equal to or lower than 600 MPa; and forming the second vapor deposition layer under vapor deposition conditions yielding a nanoindentation hardness of the layer of equal to or higher than 7.5 GPa and a compressive stress of equal to or lower than 350 MPa.

For example, with the ion-assisted method, it is possible to form a vapor deposition layer having the desired nanoindentation hardness and compressive stress by adjusting the degree of vacuum during vapor deposition, the acceleration voltage, the acceleration current, and the flow and blending ratio of the assisting gas (ionized gas). To achieve good film formation, the acceleration voltage is desirably adjusted to about 50 to 700 V and the acceleration current to about 30 to 250 mA. It is preferable to set the film formation conditions within the above-stated ranges based on the desired film characteristics. The assisting gas (ionized gas) employed in the ion-assisted method is desirably oxygen, nitrogen, or a mixed gas thereof from the perspective of reactivity during film formation. Conducting preliminary testing to achieve desired film characteristics and determining the film formation conditions used in actual manufacturing based on a mastery of the film characteristics of the vapor deposition layers that form under prescribed film formation conditions may be desirable measures.

The eyeglass lens of the present aspect can contain at least one laminate structure in the coating in which the first vapor deposition layer is adjacent to the second vapor deposition layer. Based on the desired property (for example, antireflective property), it can contain two or more such laminate structures. Further, the laminate structure can be contained in a form in which the first vapor deposition layer and the second vapor deposition layer are positioned adjacent to each other in a three or more layer laminate state, such as the first vapor deposition layer/second vapor deposition layer/first vapor deposition layer, or second vapor deposition layer/first vapor deposition layer/second vapor deposition layer. Layers other than the first vapor deposition layer and the second vapor deposition layer can be contained in the coating. For example, one or more vapor deposition films (also referred to as "electrically conductive oxide layers", hereinafter) that are formed by vapor deposition using a vapor deposition source comprising an electrically conductive oxide as the main component thereof can be further incorporated in the coating to prevent the eyeglass lens from developing a charge and dirt and dust from adhering. Providing the electrically conductive oxide layer makes it possible to achieve a surface resistivity of about $5 \times 10^9$ to $9 \times 10^{10}$ $\Omega/\square$, thereby effectively inhibiting the adhesion of dirt and dust to the surface of the lens on the above coating side. Indium oxide, tin oxide, zinc oxide, and composite oxides thereof, which are known as transparent electrically conductive oxides, are desirably employed so as not to reduce the transparence of the eyeglass lens. Indium-tin oxide (ITO) is an example of a particularly desirable electrically conductive oxide from the perspective of transparence and electrical conductivity. The thickness of the electrically conductive oxide layer is desirably about 4 nm to 6 nm to maintain an antireflective property and good transparence of the eyeglass lens. Further, the overall thickness of the first vapor deposition layer contained in the coating is desirably 300 nm to 600 nm to obtain an eyeglass lens with better durability. The overall thickness of the second vapor deposition layer contained in the coating can be about 50 nm to 100 nm, for example, but is not specifically limited.

In the eyeglass lens of the present aspect, the coating is present on the lens substrate through a hardcoat layer. The coating can be present on just one side of the lens substrate, or on both sides thereof. Coatings with differing states of lamination can be present on the object-side surface of the lens substrate and on the eyeball-side surface, respectively. The "object-side surface" refers to the surface that is positioned on the object side when the eyeglass lens of the present invention has been inserted into a frame to fabricate an eyeglass and is being worn. The "eyeball-side surface" refers to the surface that is positioned on the eyeball side. An example of the hardcoat layer is a cured film or the like formed using a curable composition containing an acrylic compound or a curable composition containing an organic silicon compound and metal oxide particles. An example of a specific example of a hardcoat layer is a cured film formed by the method described in the publication of Japanese Patent No. 4,220,232, which is expressly incorporated herein by reference in its entirety, paragraphs [0025] to [0028]. However, there is no limitation thereto; it suffices for the film to be harder than the lens substrate surface and contribute to enhancing durability. A functional film in addition to the hardcoat film can also be present between the lens substrate and the coating. An example of such a functional film is a primer layer (adhesive layer) to enhance adhesion. The thickness of a film that is present between the lens substrate and the coating is, for example, about 0.5 to 10 $\mu$m for each film. It suffices to set the thickness of each layer so that it is capable of performing the expected function; the thickness is not specifically limited. Some lens substrates are sold with hardcoat layers on them to prevent scratching during storage and distribution. Such lens substrates can also be employed in the present invention.

The lens substrate is not specifically limited. Any material that is normally employed in the lens substrates of eyeglass lenses can be employed, such as plastics such as polyurethane, polythiourethane, polycarbonate, and diethylene glycol bis(allyl carbonate); and inorganic glasses. Neither the thickness nor the diameter of the lens substrate is specifically limited. The thickness is normally about 1 to 30 mm and the diameter about 50 to 100 mm. When the eyeglass lens of the present invention is used to correct vision, the use of a material with a refractive index nd of about 1.5 to 1.8 is usual. Colorless materials are normally employed as lens substrates, but colored materials can be employed to the extent transparence is not lost.

By the way, the above coating is not limited to an antireflective film; any film that selectively reflects light within a prescribed wavelength range and functions as a reflecting layer (cutting layer) to reduce the amount of light entering the eye of an eyeglass wearer will do. An example of light that is desirably reflected is ultraviolet radiation. As set forth above, the liquid-crystal monitors that have become so widespread in recent years, particularly LED liquid-crystal monitors, intensely emit short wavelength light known as blue light that has a wavelength of about 420 nm to 450 nm close to the wavelength of UV radiation. Thus, to effectively reduce the eye fatigue and eye soreness that occur when using a personal computer or the like for extended periods, it is desirable to form a coating having a blue light-reflecting function. The present inventors conducted extensive research in this regard. As a result, they made the novel discovery that, by forming the coating (blue light-reflecting coating) sequentially comprising, from the lens substrate side, a first layer 25 to 32 nm in thickness, formed by vapor deposition employing a vapor deposition source comprising $SiO_2$ as the main component thereof; a second layer 7 to 9 nm in thickness, formed by vapor deposition employing a vapor deposition source comprising $Ta_2O_5$ or $ZrO_2$ as the main component thereof; a third layer 360 to 390 nm in thickness, formed by vapor deposition employing a vapor deposition source comprising $SiO_2$ as the main component thereof; a fourth layer 10 to 13 nm in thickness, formed by vapor deposition employing a vapor deposition source comprising $Ta_2O_5$ or $ZrO_2$ as the main component thereof; a fifth layer 34 to 38 nm in thickness, formed by vapor deposition employing a vapor deposition source comprising $SiO_2$ as the main component thereof; a sixth layer 42 to 45 nm in thickness, formed by vapor deposition employing a vapor deposition source comprising $Ta_2O_5$ or $ZrO_2$ as the main component thereof; and a seventh layer 110 to 115 nm in thickness, formed by vapor deposition employing a vapor deposition source comprising $SiO_2$ as the main component thereof, an eyeglass lens could be obtained that had the property of reflecting entering light in the 420 to 450 nm wavelength range on the lens surface on the side on which the coating is present. In the blue light-reflecting film, the lens surface on the side where the blue light-reflecting film was present was imparted with the property of reflecting incident light in a 420 to 450 nm wavelength range by laminating vapor deposition layers in the form of low refractive index layers comprising $SiO_2$ as the main component thereof and vapor deposition layers in the form of high refractive index layers comprising $Ta_2O_5$ or $ZrO_2$ as the main component thereof in the sequence given above to film thicknesses determined by the refractive index of the film material and optical simulation based on the wavelength of the blue light to be reflected with the goal of imparting the function of reflecting blue light to the eyeglass lens. The presence of the film did not greatly reduce the transparence of the eyeglass lens because the multilayer vapor deposition film obtained by depositing the film materials set forth above to the above-stated film thicknesses was highly transparent. In this context, the reflective property (reflecting function) is denoted by a reflectance of equal to or more than 3 percent relative to all light rays within the 420 to 450 nm wavelength range. That is because eyeglass wearers can realize that, with a reflectance of equal to or more than 3 percent, eyeglass lenses block blue light and reduce irritation. The above reflectance desirably equal to or lower than 8 percent. The reasons for this are as stated above.

In the eyeglass lens of the present aspect, it is possible to provide the blue light-reflecting film on just the object-side surface or the eyeball-side surface. Most of the blue light entering the eye of an eyeglass wearer enters through the object-side surface. However, the blue light entering through the object-side surface may also be reflected off the blue light-reflecting film that is provided on the eyeball-side surface. It is desirable to provide the blue light-reflecting film on the object-side surface to effectively block the blue light entering through the object-side surface when the blue light-reflecting film is provided on just one of the two surfaces of the lens. For the reasons set forth above, it is undesirable to impart a strong blue light-reflecting property to just one of the surfaces of an eyeglass lens. Conversely, reducing the blue light entering the eyes of an eyeglass wearer relates to reducing the burden on the eyes of the eyeglass wearer. Accordingly, in the eyeglass lens of the present invention, it is desirable to achieve a high blue light-reflecting property in the eyeglass lens as a whole by imparting a dispersed blue light-reflecting property to the object-side surface and eyeball-side surface of the eyeglass lens. From this perspective, when imparting a blue light-reflecting property to the eyeglass lens of the present aspect, it is desirable to provide a blue light-reflecting film on both the surfaces of the object side and the eyeball side. When providing blue light-reflecting films on both surfaces of a lens, it is desirable to impart a good field of view to the eyeglass wearer by dispersing the blue light-reflecting property to both lens surfaces so that the total spectral transmittance is equal to or less than 15 percent, or even equal to or less than 12 percent - for example, about 9 to 11 percent. It is also acceptable to impart equal blue light-reflecting properties to the object-side surface and eyeball-side surface (for example, the reflectance can be made about 5 percent each on the object-side surface and eyeball-side surface), or a stronger blue light-reflecting property can be imparted to either one. In the latter case, imparting a stronger blue light-reflecting property to the object-side surface is desirable because the light entering from the eyeball-side surface returns back while most of the blue light is effectively blocked, thereby reducing the amount entering the eye of the eyeglass wearer.

The eyeglass lens of the present aspect can have a known functional film such as a hardcoat layer, water-repelling layer and the like on the surface of the coating set forth above. When a water-repelling layer containing an organic silicon compound is directly provided on the coating, it is desirable for the outermost layer of the coating to be the first vapor deposition layer from the perspective of adhesion.

The eyeglass lens of Aspect B is an eyeglass lens comprising a multilayer vapor deposition film directly or indirectly on a lens substrate, wherein the multilayer vapor deposition film sequentially comprises, from the lens substrate side:

a first layer 25 to 32 nm in thickness, formed by vapor deposition with a vapor deposition source comprising a main component in the form of $SiO_2$;

a second layer 7 to 9 nm in thickness, formed by vapor deposition with a vapor deposition source comprising a main component in the form of $Ta_2O_5$ or $ZrO_2$;

a third layer 360 to 390 nm in thickness, formed by vapor deposition with a vapor deposition source comprising a main component in the form of $SiO_2$;

a fourth layer 10 to 13 nm in thickness, formed by vapor deposition with a vapor deposition source comprising a main component in the form of $Ta_2O_5$ or $ZrO_2$;

a fifth layer 34 to 38 nm in thickness, formed by vapor deposition with a vapor deposition source comprising a main component in the form of $SiO_2$;

a sixth layer 42 to 45 nm in thickness, formed by vapor deposition with a vapor deposition source comprising a main component in the form of $Ta_2O_5$ or $ZrO_2$; and

a seventh layer 110 to 115 nm in thickness, formed by vapor deposition with a vapor deposition source comprising a main component in the form of $SiO_2$, as well as

which has a property of reflecting entering light in 420 to 450 nm wavelength range on a lens surface on a side on which the multilayer vapor deposition film is present.

The blue light-reflecting film is imparted with the property of reflecting incident light (blue light) in the 420 to 450 nm wavelength range on the lens surface on the side on which the blue light-reflecting film is present by laminating, in the above sequence, low refractive index layers in the form of vapor deposition layers comprising $SiO_2$ as the main component thereof and high refractive index layers in the form of vapor deposition layers comprising of $Ta_2O_5$ or $ZrO_2$ as the main component thereof with the goal of imparting the function of reflecting blue light to the eyeglass lens, with the above film thicknesses being determined by optical simulation based on the refractive index of the film material and the wavelength of the blue light to be reflected. Since the transparence of the multilayer vapor deposition film in which the above film materials are laminated with the above film thicknesses is high, the presence of the film does not greatly decrease the transparence of the eyeglass lens. When equal to or more than about 50 mass percent of $SiO_2$ is contained in the vapor deposition source, the vapor deposition film that is formed can function as a low refractive index layer. When equal to or more than about 50 mass percent of $Ta_2O_5$ or $ZrO_2$ is contained as a vapor deposition source, the vapor deposition layer that is formed can function as a high refractive index layer.

In the eyeglass lens of the present aspect, the blue light-reflecting film can be directly present on the lens substrate, or can be indirectly present thereupon through one or more functional films.

The functional films that can be present between the lens substrate and the blue light-reflecting film are not specifically limited. Examples are functional films contributing to enhancing durability in the form of a hardcoat layer and a primer layer (adhesive layer) for enhancing adhesion. The thickness of these optionally formed functional films can be set to within a range that can provide the expected function, and is not specifically limited.

The blue light-reflecting film can be provided on just the object-side surface or on just the eyeball-side surface of the eyeglass lens of the present aspect. Most of the blue light entering the eye of the eyeglass wearer enters through the object-side surface. However, blue light entering through the object-side surface may be reflected by a blue light reflecting film provided on the eyeball-side surface. When the blue light-reflecting film is provided on just one of the two lens surfaces, it is desirable for it to be the object-side surface to effectively block the blue light entering from the object-side surface. Further, for the reasons stated above, it is undesirable to impart a strong blue light-reflecting property to just one surface of the eyeglass lens. Conversely, reducing the blue light entering the eye of the eyeglass wearer relates to lightening the burden on the eye of the eyeglass wearer. Accordingly, the eyeglass lens of the present invention desirably imparts in dispersed fashion a blue light-reflecting property to the object-side surface and eyeball-side surface of the eyeglass lens to achieve a strong blue-light reflecting property in the eyeglass lens as a whole. From this perspective, it is desirable to provide the blue light-reflecting layer on both the object-side and eyeball-side surfaces in the eyeglass lens of the present invention. When providing the blue light-reflecting film on both surfaces of the lens, imparting in dispersed fashion the blue light-reflecting property to both surfaces of the lens so that the combined reflectance of both surfaces is equal to or less than 15 percent, even equal to or less than 12 percent - for example, about 9 to 11 percent - is desirable to provide a good field of view to the eyeglass wearer. An equal blue light-reflecting property can be imparted to the object-side surface and eyeball-side surface (for example, a reflectance of about 5 percent can be imparted to the object-side surface and to the eyeball-side surface), or a stronger blue light-reflecting property can be imparted to either one. In the latter case, imparting a greater blue light-reflecting property to the object-side surface is desirable to cause the light entering from the eyeball-side surface to return while effectively blocking most of the blue light, thereby reducing the amount entering the eye of the eyeglass wearer.

The blue light-reflecting film set forth above can be formed on the lens substrate by sequential vapor deposition using the above vapor deposition sources. Vapor deposition can be conducted by the vacuum vapor deposition method, ion plating method, plasma CVD method, ion-assisted method, reactive sputtering method, or the like. The ion-assisted method is desirable to obtain high film hardness and good adhesion. For details on the ion-assisted method, reference can be made to the above description relating to Aspect A.

The blue light-reflecting film is obtained by sequentially laminating the above first through seventh layers. To prevent the eyeglass lens from developing a charge and dirt and dust from adhering, it is possible to further incorporate a one or more vapor deposition film (electrically conductive oxide layer) formed by vapor deposition using a vapor deposition source comprising an electrically conductive oxide as the main component thereof. Providing an electrically conductive oxide layer makes it possible to achieve a surface resistivity of about $5 \times 10^9$ to $9 \times 10^{10}$ $\Omega/\square$ on the lens surface on the blue light-reflecting film side. This makes it possible to effectively inhibit the adhering of dirt and dust to the lens surface. For details on the electrically conductive oxide layer, reference can be made to the description relating to Aspect A above.

Known functional films such as a hardcoat layer and a water-repelling layer can be present on the surface of the blue light-reflecting film set forth above in the eyeglass lens of the present aspect.

For additional details regarding the eyeglass lens of Aspect B, reference can be made to the description relating to Aspect A.

The eyeglass lens desirably has high transparence to impart a good field of view to the eyeglass wearer. From this perspective, when the eyeglass lens of the present invention is a colorless lens in which the lens substrate has not been imparted with color, it desirably has a luminous transmittance of equal to or greater than 90 percent, even equal to or greater than 95 percent - for example, a high transmittance falling within a range of 95 to 99 percent. The term "luminous transmittance" as used in the present invention is a value measured according to JIS T7330.

Further, in the eyeglass lens having the above blue light-reflecting film, by reducing the amount of blue light entering the eye, the effect of blue light on the eye can be reduced.

The eyeglass lens of the present invention can be processed by an optician, or by a manufacturer receiving an order from an optician, to provide an eyeglass affording good durability and good external appearance.

EXAMPLES

The present invention is further described below through Examples. However, the present invention is not limited to the embodiments given in Examples.

The nanoindentation hardness and film stress measurement in Examples given below were measured by the following methods. The measurement values are given in the tables below. The methods of measuring the nanoindentation hardness and film stress (compressive stress and tensile stress) are known. Specifically, they can be obtained by the measurement methods given below, for example.

For Aspect A, Examples 1-1 to 1-4 below are Examples, and Examples 2-1 to 2-4 are comparative examples.

For Aspect B, Examples 1-2 and 1-4 below are Examples, and Examples 1-1 and 1-3 are comparative examples.

<u>(1) Measurement of nanoindentation hardness</u>

A single-layer vapor deposition film of thickness identical to each layer was formed on a glass substrate by ion-assisted vapor deposition under the same conditions as when forming each layer. The hardness of the vapor deposition film obtained was measured by the nanoindentation method. A nanoindentation hardness tester ("ENT-1100a" made by ELIONIX Corp.) was employed with a Berkovich indenter made of diamond to conduct the measurements. A load-unloading curve was measured over a measurement load range of 10 to 100 mN and the hardness (nanoindentation hardness) was calculated.

<u>(2) Measurement of film stress</u>

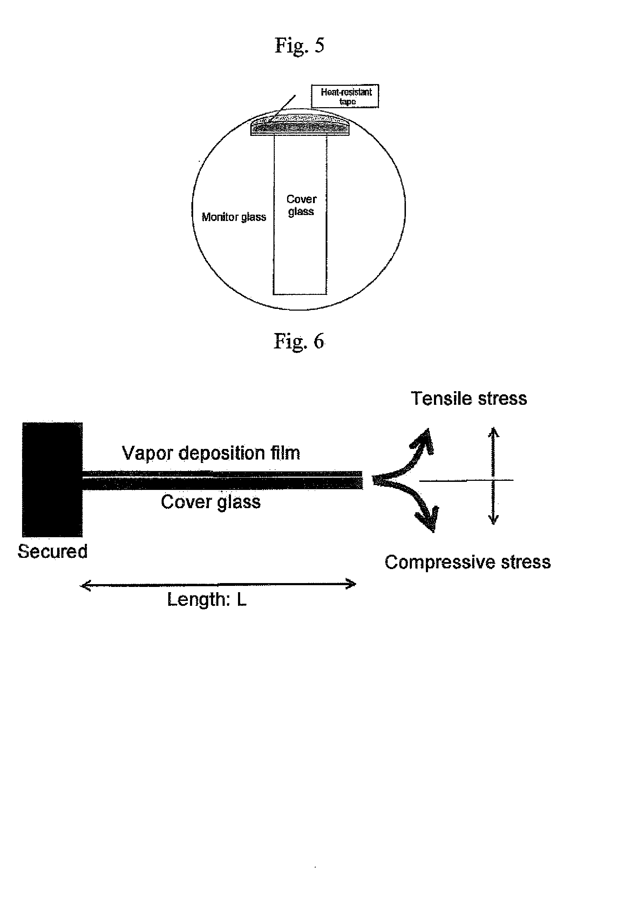

A piece of heat-resistant tape measuring 5 to 8 mm x 30 to 40 mm was adhered to the surface of a piece of disk-shaped monitor glass (70 mm in diameter) that had been washed in a washer. As shown in the schematic diagram of Fig. 5, a flat sheet-like piece of cover glass (also referred to as the "substrate", hereinafter) was placed on the surface of the monitor glass. To prevent adhesion to the monitor glass, one edge was positioned on the heat-resistant tape, after which that edge of the cover glass was secured with heat-resistant tape. This monitor glass with cover glass was placed in a vapor deposition device and a single-layer vapor deposition film of identical thickness to each layer was formed on the surface of the cover glass by ion-assisted vapor deposition under the same conditions as when forming each layer.

Following film formation, the cover glass was removed from the monitor glass. As shown in Fig. 6, with one edge secured, the amount of displacement from the horizontal plane was measured and the Stoney equation given below was used to calculate the film stress $\sigma$.

$$\sigma = \frac{Es \cdot ts^2 \cdot d}{3(1-vs) \cdot L^2 \cdot tf}$$

[In the equation, Es: Young's modulus of the substrate; ts: thickness of the substrate; vs: Poisson ratio of the substrate; L: length of the substrate; tf: thickness of the vapor deposition film; d: amount of displacement]

[Example 1-1]

A plastic lens substrate (brand name EYAS, made by HOYA (Co., Ltd.), refractive index 1.6, colorless lens) was employed, both surfaces of which had been optically finished, on both surface of which hardcoats had been applied, the object-side surface of which was convex, and the eyeball-side surface of which was concave. A total of eight layers of vapor deposition films were sequentially formed by the ion-assisted method under the conditions given in Table 1 using assist gases in the form of oxygen gas and nitrogen gas on the hardcoat surface on the convex side. The vapor deposition sources comprised of the oxides stated in the table, with the inevitable presence of impurities, were employed in the present Example and in Examples described farther below. The film thicknesses given below were the physical film thicknesses calculated based on the film formation conditions. After forming the eighth vapor deposition film, a ninth film in the form of a water-repelling layer was formed thereover by halogen heating vapor deposition using a vapor deposition source in the form of a 50 percent:50 percent, as a mass percent, mixture of fluorine-substituted alkyl group-containing organic silicon compounds in the form of KY130 and KY500 made by Shinetsu Chemical (Co., Ltd.).

[Table 1]

| | Vapor deposition source (degree of vacuum in chamber during vapor deposition given in parentheses) | Film thickness (nm) | Ion gun conditions | | Quantity of assist gas introduced | |
|---|---|---|---|---|---|---|
| | | | Current (mA) | Voltage (V) | $O_2$(cc) | $N_2$(cc) |
| Layer 1 | $SiO_2$ (7E-3Pa) | 40.2 | 210 | 420 | 10 | 10 |
| Layer 2 | $Ta_2O_5$ (9E-3Pa) | 6.3 | 210 | 320 | 10 | 10 |
| Layer 3 | $SiO_2$ (7E-3Pa) | 382.1 | 210 | 420 | 10 | 10 |
| Layer 4 | ITO (1.1E-2Pa) | 5.0 | 100 | 200 | 50 | 0 |
| Layer 5 | $Ta_2O_5$ (9E-3Pa) | 23.6 | 210 | 320 | 10 | 10 |
| Layer 6 | $SiO_2$ (7E-3Pa) | 29.9 | 210 | 420 | 10 | 10 |
| Layer 7 | $Ta_2O_5$ (9E-3Pa) | 46.2 | 210 | 320 | 10 | 10 |
| Layer 8 | $SiO_2$ (7E-3Pa) | 97.6 | 210 | 420 | 10 | 10 |

[Table 2]

| | Vapor deposition source | Nanoindentation hardness (GPa) | Compressive stress (MPa) |
|---|---|---|---|
| Layer 1 | $SiO_2$ | 5.4 | 399 |
| Layer 2 | $Ta_2O_5$ | 7.6 | 103 |
| Layer 3 | $SiO_2$ | 5.4 | 399 |

(continued)

|  | Vapor deposition source | Nanoindentation hardness (GPa) | Compressive stress (MPa) |
|---|---|---|---|
| Layer 4 | ITO | - | - |
| Layer 5 | Ta$_2$O$_5$ | 7.6 | 103 |
| Layer 6 | SiO$_2$ | 5.4 | 399 |
| Layer 7 | Ta$_2$O$_5$ | 7.6 | 103 |
| Layer 8 | SiO$_2$ | 5.4 | 399 |

[Example 1-2]

With the exception that the conditions under which the vapor deposition films of layers 1 to 8 were formed were changed as indicated in Table 3, the films were formed by the same method as in Example 1-1.

[Table 3]

|  | Vapor deposition source (degree of vacuum in chamber during vapor deposition given in parentheses) | Film thickness (nm) | Ion gun conditions | | Quantity of assist gas introduced | |
|---|---|---|---|---|---|---|
|  |  |  | Current (mA) | Voltage (V) | O$_2$(cc) | N$_2$(cc) |
| Layer 1 | SiO$_2$ (7E-3Pa) | 30.4 | 210 | 420 | 10 | 10 |
| Layer 2 | Ta$_2$O$_5$ (9E-3Pa) | 7.0 | 210 | 320 | 10 | 10 |
| Layer 3 | SiO$_2$ (7E-3Pa | 386.9 | 210 | 420 | 10 | 10 |
| Layer 4 | ITO (1.1E-2Pa) | 5.0 | 100 | 200 | 50 | 0 |
| Layer 5 | Ta$_2$O$_5$ (9E-3Pa) | 11.5 | 210 | 320 | 10 | 10 |
| Layer 6 | SiO$_2$ (7E-3Pa) | 36.7 | 210 | 420 | 10 | 10 |
| Layer 7 | Ta$_2$O$_5$ (9E-3Pa) | 42.9 | 210 | 320 | 10 | 10 |
| Layer 8 | SiO$_2$ (7E-3Pa) | 112.5 | 210 | 420 | 10 | 10 |

[Table 4]

|  | Vapor deposition source | Nanoindentation hardness (GPa) | Compressive stress (MPa) |
|---|---|---|---|
| Layer 1 | SiO$_2$ | 5.4 | 399 |
| Layer 2 | Ta$_2$O$_5$ | 7.6 | 103 |
| Layer 3 | SiO$_2$ | 5.4 | 399 |
| Layer 4 | ITO | - | - |
| Layer 5 | Ta$_2$O$_5$ | 7.6 | 103 |
| Layer 6 | SiO$_2$ | 5.4 | 399 |
| Layer 7 | Ta$_2$O$_5$ | 7.6 | 103 |

(continued)

| | Vapor deposition source | Nanoindentation hardness (GPa) | Compressive stress (MPa) |
|---|---|---|---|
| Layer 8 | $SiO_2$ | 5.4 | 399 |

[Example 1-3]

With the exceptions that the conditions under which each vapor deposition film was formed were changed as indicated in Table 5 and the water-repelling layer was formed after forming the multilayer vapor deposition film comprised of a total of seven layers of vapor deposition films, the films were formed by the same method as in Example 1-1.

[Table 5]

| | Vapor deposition source (degree of vacuum in chamber during vapor deposition given in parentheses) | Film thickness (nm) | Ion gun conditions | | Quantity of assist gas introduced | |
|---|---|---|---|---|---|---|
| | | | Current (mA) | Voltage (V) | $O_2$(cc) | $N_2$(cc) |
| Layer 1 | $SiO_2$ (7E-3Pa) | 40.0 | 235 | 470 | 10 | 12 |
| Layer 2 | ITO (1.1E-2Pa) | 5.0 | 100 | 200 | 50 | 10 |
| Layer 3 | $SiO_2$ (7E-3Pa) | 182.0 | 235 | 470 | 10 | 12 |
| Layer 4 | $ZrO_2$ (9E-3Pa) | 28.0 | 255 | 410 | 10 | 12 |
| Layer 5 | $SiO_2$ (7E-3Pa) | 30.0 | 235 | 470 | 10 | 12 |
| Layer 6 | $ZrO_2$ (9E-3Pa) | 46.0 | 255 | 410 | 10 | 12 |
| Layer 7 | $SiO_2$ (7E-3Pa) | 98.0 | 235 | 470 | 10 | 12 |

Table 6]

| | Vapor deposition source | Nanoindentation hardness (GPa) | Compressive stress (MPa) |
|---|---|---|---|
| Layer 1 | $SiO_2$ | 5.0 | 500 |
| Layer 2 | ITO | - | - |
| Layer 3 | $SiO_2$ | 5.0 | 500 |
| Layer 4 | $ZrO_2$ | 9.0 | 300 |
| Layer 5 | $SiO_2$ | 5.0 | 500 |
| Layer 6 | $ZrO_2$ | 9.0 | 300 |
| Layer 7 | $SiO_2$ | 5.0 | 500 |

[Example 2-1]

With the exception that the conditions under which the vapor deposition films were formed using $SiO_2$ as a vapor deposition source were changed as indicated in Table 7, the films were formed by the same method as in Example 1-1.

[Table 7]

| | Vapor deposition source (degree of vacuum in chamber during vapor deposition given in parentheses) | Film thickness (nm) | Ion gun conditions | | Quantity of assist gas introduced | |
|---|---|---|---|---|---|---|
| | | | Current (mA) | Voltage (V) | $O_2$(cc) | $N_2$(cc) |
| Layer 1 | $SiO_2$ (7E-3Pa) | 40.2 | 110 | 220 | 10 | 10 |
| Layer 2 | $Ta_2O_5$ (9E-3Pa) | 6.3 | 210 | 320 | 10 | 10 |
| Layer 3 | $SiO_2$ (7E-3Pa) | 382.1 | 110 | 220 | 10 | 10 |
| Layer 4 | ITO (1.1E-2Pa) | 5.0 | 100 | 200 | 50 | 0 |
| Layer 5 | $Ta_2O_5$ (9E-3Pa) | 23.6 | 210 | 320 | 10 | 10 |
| Layer 6 | $SiO_2$ (7E-3Pa) | 29.9 | 110 | 220 | 10 | 10 |
| Layer 7 | $Ta_2O_5$ (9E-3Pa) | 46.2 | 210 | 320 | 10 | 10 |
| Layer 8 | $SiO_2$ (7E-3Pa) | 97.6 | 110 | 220 | 10 | 10 |

[Table 8]

| | Vapor deposition source | Nanoindentation hardness (GPa) | Compressive stress (MPa) |
|---|---|---|---|
| Layer 1 | $SiO_2$ | 4.7 | 260 |
| Layer 2 | $Ta_2O_5$ | 7.6 | 103 |
| Layer 3 | $SiO_2$ | 4.7 | 260 |
| Layer 4 | ITO | - | - |
| Layer 5 | $Ta_2O_5$ | 7.6 | 103 |
| Layer 6 | $SiO_2$ | 4.7 | 260 |
| Layer 7 | $Ta_2O_5$ | 7.6 | 103 |
| Layer 8 | $SiO_2$ | 4.7 | 260 |

[Example 2-2]

With the exception that the conditions under which the vapor deposition films were formed using $SiO_2$ as a vapor deposition source were changed as indicated in Table 9, the films were formed by the same method as in Example 1-1.

[Table 9]

| | | Vapor deposition source (degree of vacuum in chamber during vapor deposition given in parentheses) | Film thickness (nm) | Ion gun conditions | | Quantity of assist gas introduced | |
|---|---|---|---|---|---|---|---|
| | | | | Current (mA) | Voltage (V) | $O_2$(cc) | $N_2$(cc) |
| Layer 1 | | $SiO_2$ (7E-3Pa) | 40.2 | 300 | 600 | 10 | 10 |
| Layer 2 | | $Ta_2O_5$ (9E-3Pa) | 6.3 | 210 | 320 | 10 | 10 |
| Layer 3 | | $SiO_2$ (7E-3Pa) | 382.1 | 300 | 600 | 10 | 10 |
| Layer 4 | | ITO (1.1E-2Pa) | 5.0 | 100 | 200 | 50 | 0 |
| Layer 5 | | $Ta_2O_5$ (9E-3Pa) | 23.6 | 210 | 320 | 10 | 10 |
| Layer 6 | | $SiO_2$ (7E-3Pa) | 29.9 | 300 | 600 | 10 | 10 |
| Layer 7 | | $Ta_2O_5$ (9E-3Pa) | 46.2 | 210 | 320 | 10 | 10 |
| Layer 8 | | $SiO_2$ (7E-3Pa) | 97.6 | 300 | 600 | 10 | 10 |

[Table 10]

| | Vapor deposition source | Nanoindentation hardness (GPa) | Compressive stress (MPa) |
|---|---|---|---|
| Layer 1 | $SiO_2$ | 6.4 | 699 |
| Layer 2 | $Ta_2O_5$ | 7.6 | 103 |
| Layer 3 | $SiO_2$ | 6.4 | 699 |
| Layer 4 | ITO | - | - |
| Layer 5 | $Ta_2O_5$ | 7.6 | 103 |
| Layer 6 | $SiO_2$ | 6.4 | 699 |
| Layer 7 | $Ta_2O_5$ | 7.6 | 103 |
| Layer 8 | $SiO_2$ | 6.4 | 699 |

[Example 2-3]

With the exception that the conditions under which the vapor deposition films were formed using $Ta_2O_5$ as a vapor deposition source were changed as indicated in Table 11, the films were formed by the same method as in Example 1-1.

Table 11]

| | | Vapor deposition source (degree of vacuum in chamber during vapor deposition given in parentheses) | Film thickness (nm) | Ion gun conditions | | Quantity of assist gas introduced | |
|---|---|---|---|---|---|---|---|
| | | | | Current (mA) | Voltage (V) | $O_2$(cc) | $N_2$(cc) |
| Layer 1 | | $SiO_2$ (7E-3Pa) | 40.2 | 210 | 420 | 10 | 10 |

(continued)

| | Vapor deposition source (degree of vacuum in chamber during vapor deposition given in parentheses) | Film thickness (nm) | Ion gun conditions | | Quantity of assist gas introduced | |
|---|---|---|---|---|---|---|
| | | | Current (mA) | Voltage (V) | $O_2$(cc) | $N_2$(cc) |
| Layer 2 | $Ta_2O_5$ (9E-3Pa) | 6.3 | 110 | 150 | 10 | 10 |
| Layer 3 | $SiO_2$ (7E-3Pa) | 382.1 | 210 | 420 | 10 | 10 |
| Layer 4 | ITO (1.1E-2Pa) | 5.0 | 100 | 200 | 50 | 0 |
| Layer 5 | $Ta_2O_5$ (9E-3Pa) | 23.6 | 110 | 150 | 10 | 10 |
| Layer 6 | $SiO_2$ (7E-3Pa) | 29.9 | 210 | 420 | 10 | 10 |
| Layer 7 | $Ta_2O_5$ (9E-3Pa) | 46.2 | 110 | 150 | 10 | 10 |
| Layer 8 | $SiO_2$ (7E-3Pa) | 97.6 | 210 | 420 | 10 | 10 |

[Table 12]

| | Vapor deposition source | Nanoindentation hardness (GPa) | Compressive stress (MPa) |
|---|---|---|---|
| Layer 1 | $SiO_2$ | 5.4 | 399 |
| Layer 2 | $Ta_2O_5$ | 6.8 | Did not exhibit compressive stress. (Tensile stress 72 MPa) |
| Layer 3 | $SiO_2$ | 5.4 | 399 |
| Layer 4 | ITO | - | - |
| Layer 5 | $Ta_2O_5$ | 6.8 | Did not exhibit compressive stress. (Tensile stress 72 MPa) |
| Layer 6 | $SiO_2$ | 5.4 | 399 |
| Layer 7 | $Ta_2O_5$ | 6.8 | Did not exhibit compressive stress. (Tensile stress 72 MPa) |
| Layer 8 | $SiO_2$ | 5.4 | 399 |

[Example 2-4]

With the exception that the conditions under which the vapor deposition films were formed using $Ta_2O_5$ as a vapor deposition source were changed as indicated in Table 13, the films were formed by the same method as in Example 1-1.

[Table 13]

| | Vapor deposition source (degree of vacuum in chamber during vapor deposition given in parentheses) | Film thickness (nm) | Ion gun conditions | | Quantity of assist gas introduced | |
|---|---|---|---|---|---|---|
| | | | Current (mA) | Voltage (V) | O$_2$(cc) | N$_2$(cc) |
| Layer 1 | SiO$_2$ (7E-3Pa) | 40.2 | 210 | 420 | 10 | 10 |
| Layer 2 | Ta$_2$O$_5$ (9E-3Pa) | 6.3 | 330 | 450 | 10 | 10 |
| Layer 3 | SiO$_2$ (7E-3Pa) | 382.1 | 210 | 420 | 10 | 10 |
| Layer 4 | ITO (1.1E-2Pa) | 5.0 | 100 | 200 | 50 | 0 |
| Layer 5 | Ta$_2$O$_5$ (9E-3Pa) | 23.6 | 330 | 450 | 10 | 10 |
| Layer 6 | SiO$_2$ (7E-3Pa) | 29.9 | 210 | 420 | 10 | 10 |
| Layer 7 | Ta$_2$O$_5$ (9E-3Pa) | 46.2 | 330 | 450 | 10 | 10 |
| Layer 8 | SiO$_2$ (7E-3Pa) | 97.6 | 210 | 420 | 10 | 10 |

[Table 14]

| | Vapor deposition source | Nanoindentation hardness (GPa) | Compressive stress (MPa) |
|---|---|---|---|
| Layer 1 | SiO$_2$ | 5.4 | 399 |
| Layer 2 | Ta$_2$O$_5$ | 8.7 | 394 |
| Layer 3 | SiO$_2$ | 5.4 | 399 |
| Layer 4 | ITO | - | - |
| Layer 5 | Ta$_2$O$_5$ | 8.7 | 394 |
| Layer 6 | SiO$_2$ | 5.4 | 399 |
| Layer 7 | Ta$_2$O$_5$ | 8.7 | 394 |
| Layer 8 | SiO$_2$ | 5.4 | 399 |

Evaluation methods

(1) External appearance: The eyeglass lenses prepared in the above Examples were visually observed. When uneven interference color and change in interference color were observed, an evaluation of "x" was made. Those lenses having an appearance that was suitable as a product lens without the observation of uneven interference color and change in interference color were evaluated as "○". Uneven interference color and change in interference color are phenomena caused by deformation of the lens substrate.

(2) Abrasion resistance test 1: With a reciprocating friction and wear testing machine made by Shinto Scientific Co., Ltd., steel wool (#00000 made by Bonstar Co., Ltd.) was used to conduct a 20-pass back and forth abrasion test at a load of 2.5 kg on the lens surfaces (convex surfaces) on which the films had been formed above. Those on which scratches were visually observed were evaluated as "x" and those on which they were not observed were evaluated as "○".

(3) Abrasion resistance test 2: The Bayer value was measured by the following steps (a) to (t). The lower the Bayer value, the lower the abrasion resistance indicated.

(a) One reference lens (HL70 plastic lens substrate made by HOYA Corporation, refractive index 1.50) and two lenses prepared in each Example were obtained.
(b) The haze value was measured before the abrasion test.
(c) An abrasion test (600 surface abrasion passes back and forth using sand) was conducted with an abrasion tester HB Tester (made by SOYA Corporation).
(d) A haze value measuring device (HM150 made by Murakami Color Research Laboratory, Ltd.) was used to measure the haze before and after the abrasion test
(e) The haze value was calculated (average of two lenses, haze after abrasion - haze before abrasion).
(f) The Bayer value was calculated (haze value of reference lens/haze value of sample lens).

The above results are given in Table 15.

[Table 15]

| | External appearance | Abrasion resistance test 1 | Abrasion resistance test 2 (Bayer value) |
|---|---|---|---|
| Example 1-1 | ○ | ○ | 16 |
| Example 1-2 | ○ | ○ | 16 |
| Example 1-3 | ○ | ○ | 17 |
| Example 2-1 | ○ | × | 12 |
| Example 2-2 | × (deformation) | ○ | 18 |
| Example 2-3 | ○ | × | 11 |
| Example 2-4 | × (deformation) | ○ | 17 |

Based on the results in Table 15, it was determined that by keeping the nanoindentation hardness and compressive stress of the adjacent first vapor deposition layer ($SiO_2$ layer) and second vapor deposition layer ($Ta_2O_5$ layer or $ZrO_2$ layer) within the above-stated ranges, it was possible to achieve both durability and a good external appearance in an eyeglass lens having a multilayer vapor deposition film comprising low refractive index layers formed using silicon dioxide as the vapor deposition material, which has conventionally been quite difficult.

Evaluation of blue light-reflecting property

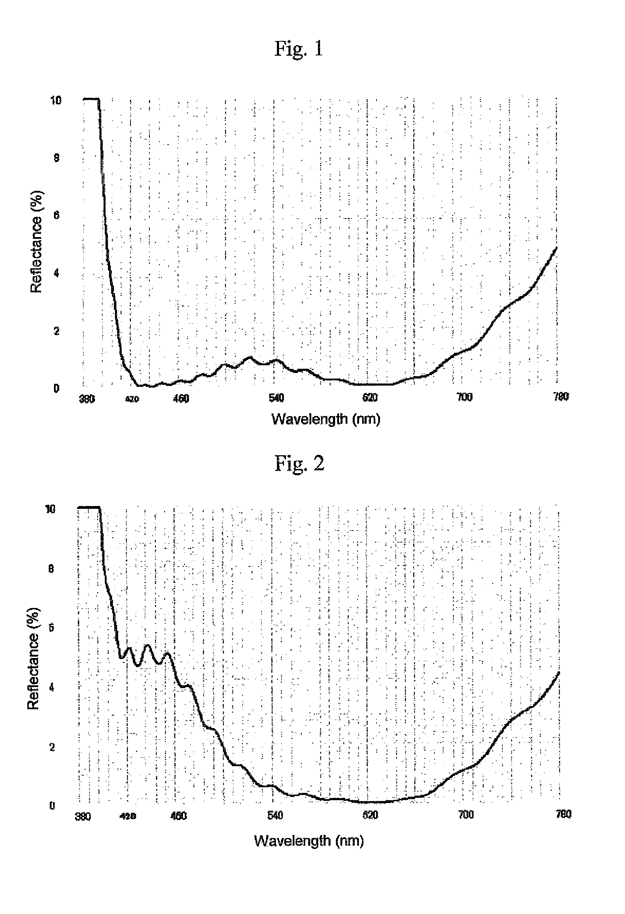

Employing a Hitachi spectrophotometer U-4100, the spectral reflectance spectra at wavelengths of 380 nm to 780 nm were measured on the convex-side surface of the eyeglass lenses produced in Examples 1-1 to 1-3. Fig. 1 shows the spectral reflectance spectrum obtained for the eyeglass lens produced in Example 1-1. Fig, 2 shows spectral reflectance spectrum obtained for the eyeglass lens produced in Example 1-2. And Fig, 3 shows the spectral reflectance spectrum obtained for the eyeglass lens produced in Example 1-3.
As shown in Fig. 1, in the eyeglass lenses prepared in Examples 1-1 and 1-3, the reflectance for light rays of wavelength 420 to 450 nm on the surface of the multilayer vapor deposition film was 0 to 0.2 percent, and no property of reflecting blue light was exhibited.
By contrast, as shown in Fig. 2, in the eyeglass lenses prepared in Example 1-2, the reflectance for all light rays of wavelength 420 to 450 nm on the surface of the multilayer vapor deposition film was about 5 percent (4.6 to 5.4 percent), and a blue light-reflecting property was present.
The above results showed that by sequentially forming from the lens substrate side the above-described first to seventh layers based on the present invention, it was possible to obtain an eyeglass lens having a blue light-reflecting property.
When the surface resistance of the surface on the convex surface side of the eyeglass lenses prepared in the various examples was measured, it was about $2 \times 10^{10}$ $\Omega/\square$ in all Examples. It was thus determined that forming an ITO vapor deposition layer imparted a charge-preventing function.

[Example 1-4]

After forming a multilayer vapor deposition film on the convex surface side by the same method as in Example 1-2, a multilayer vapor deposition film was also laminated by the ion-assisted method under the same conditions on the hardcoat surface on the concave surface side. A water-repelling layer was then formed by the same method to obtain an eyeglass lens. Since the multilayer vapor deposition film prepared on the convex surface side in the present Example was identical to that in Example 1-2, the reflecting property shown in Fig. 2 was exhibited. Since the multilayer vapor deposition layer prepared on the concave surface side was also identical to that in Example 1-2, the reflecting property shown in Fig. 2 was exhibited. That is, the eyeglass lens produced in the present example exhibited a reflectance of about 5 percent for all light rays in the 420 to 450 wavelength range on both surfaces of the lens.

Evaluation of blue light-reflecting property

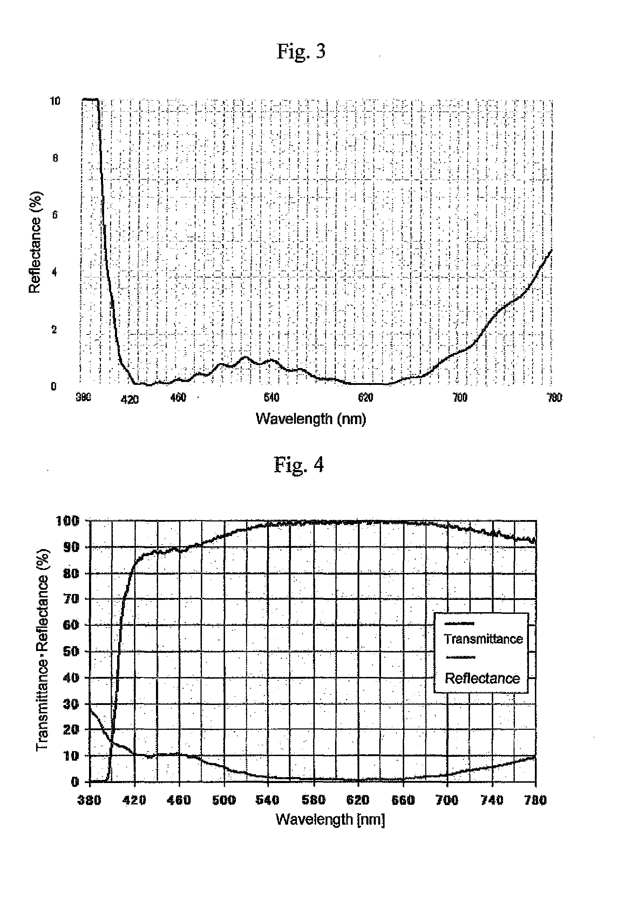

A Hitachi spectrophotometer U-4100 was used to measure the spectral reflectance spectrum and spectral transmittance spectrum at wavelengths of 380 nm to 780 nm on the convex surface side of the eyeglass lens prepared in Example 1-4. The visual transmittance was obtained from the spectra thus obtained. Fig. 4 gives the spectral reflectance spectrum and spectral transmittance spectrum obtained. As shown in Fig. 4, the eyeglass lens prepared in Example 1-4 had multilayer vapor deposition films on both surfaces of the lens, and was thus able to cut (reflect) about 10 percent of all light rays in the 420 to 450 wavelength range. The calculated luminous transmittance was 97.8 percent. The high transparence required of eyeglass lenses was confirmed to be present.

Industrial Applicability

The present invention is useful in the field of manufacturing eyeglass lenses.

**Claims**

1. An eyeglass lens comprising a coating through a hardcoat layer over a lens substrate,
   wherein the coating comprises a laminate structure of adjacent layers in the form of a first vapor deposition layer formed by vapor deposition with a vapor deposition source comprising a main component in the form of $SiO_2$ and a second vapor deposition layer formed by vapor deposition with a vapor deposition source comprising a main component in the form of $Ta_2O_5$ or $ZrO_2$;
   the first vapor deposition layer has a nanoindentation hardness of equal to or higher than 5.0 GPa and a compressive stress of equal to or lower than 600 MPa; and
   the second vapor deposition layer has a nanoindentation hardness of equal to or higher than 7.5 GPa and a compressive stress of equal to or lower than 350 MPa.

2. The eyeglass lens according to claim 1, wherein the first and second vapor deposition layers are layers formed by ion-assisted vapor deposition.

3. The eyeglass lens according to claim 1 or 2, which further comprises in the coating an electrically conductive vapor deposition layer formed by vapor deposition with a vapor deposition source comprising a main component in the form of an electrically conductive oxide.

4. The eyeglass lens according to any of claims 1 to 3, wherein the coating sequentially comprises, from the lens substrate side:

   a first layer 25 to 32 nm in thickness, formed by vapor deposition with a vapor deposition source comprising a main component in the form of $SiO_2$;
   a second layer 7 to 9 nm in thickness, formed by vapor deposition with a vapor deposition source comprising a main component in the form of $Ta_2O_5$ or $ZrO_2$;
   a third layer 360 to 390 nm in thickness, formed by vapor deposition with a vapor deposition source comprising a main component in the form of $SiO_2$;
   a fourth layer 10 to 13 nm in thickness, formed by vapor deposition with a vapor deposition source comprising a main component in the form af $Ta_2O_5$ or $ZrO_2$;
   a fifth layer 34 to 38 nm in thickness, formed by vapor deposition with a vapor deposition source comprising a main component in the form of $SiO_2$;
   a sixth layer 42 to 45 nm in thickness, formed by vapor deposition with a vapor deposition source comprising a main component in the form of $Ta_2O_5$ or $ZrO_2$; and
   a seventh layer 110 to 115 nm in thickness, formed by vapor deposition with a vapor deposition source comprising a main component in the form of $SiO_2$.

5. The eyeglass lens according to claim 4, which comprises coatings sequentially comprising the first to seventh layers on an object-side surface and on an eyeball-side surface of the lens substrate, and wherein a reflectance relative to all light rays within 420 to 450 nm wavelength range on an object-side surface and on an eyeball-side surface of the eyeglass lens ranges from 3 to 8 percent.

6. An eyeglass lens comprising a multilayer vapor deposition film directly or indirectly on a lens substrate, wherein the multilayer vapor deposition film sequentially comprises, from the lens substrate side:

> a first layer 25 to 32 nm in thickness, formed by vapor deposition with a vapor deposition source comprising a main component in the form of $SiO_2$;
> a second layer 7 to 9 nm in thickness, formed by vapor deposition with a vapor deposition source comprising a main component in the form of $Ta_2O_5$ or $ZrO_2$;
> a third layer 360 to 390 nm in thickness, formed by vapor deposition with a vapor deposition source comprising a main component in the form of $SiO_2$;
> a fourth layer 10 to 13 nm in thickness, formed by vapor deposition with a vapor deposition source comprising a main component in the form of $Ta_2O_5$ or $ZrO_2$;
> a fifth layer 34 to 38 nm in thickness, formed by vapor deposition with a vapor deposition source comprising a main component in the form of $SiO_2$;
> a sixth layer 42 to 45 nm in thickness, formed by vapor deposition with a vapor deposition source comprising a main component in the form of $Ta_2O_5$ or $ZrO_2$; and
> a seventh layer 110 to 115 nm in thickness, formed by vapor deposition with a vapor deposition source comprising a main component in the form of $SiO_2$, as well as
> which has a property of reflecting entering light in 420 to 450 nm wavelength range on a lens surface on a side on which the multilayer vapor deposition film is present.

7. The eyeglass lens according to claim 6, which comprises the multilayer vapor deposition film on both an object-side surface and an eyeball-side surface of the lens substrate, and wherein a reflectance relative to all light rays within 420 to 450 nm wavelength range on an object-side surface and on an eyeball-side surface of the eyeglass lens ranges from 3 to 8 percent.

8. The eyeglass lens according to claim 6 or 7, wherein the multilayer vapor deposition film further comprises a vapor deposition layer formed by vapor deposition with a vapor deposition source comprising a main component in the form of an electrically conductive oxide.

Fig. 1

Fig. 2

Fig. 3

Fig. 4

## Fig. 5

Heat-resistant tape

Monitor glass

Cover glass

## Fig. 6

Tensile stress

Vapor deposition film

Cover glass

Secured

Compressive stress

Length: L

## INTERNATIONAL SEARCH REPORT

| | International application No. |
|---|---|
| | PCT/JP2012/078120 |

A. CLASSIFICATION OF SUBJECT MATTER

*G02C7/02*(2006.01)i, *B32B9/00*(2006.01)i, *G02B1/10*(2006.01)i, *G02B5/26*(2006.01)i, *G02B5/28*(2006.01)i

According to International Patent Classification (IPC) or to both national classification and IPC

B. FIELDS SEARCHED

Minimum documentation searched (classification system followed by classification symbols)
G02C7/02, B32B9/00, G02B1/10, G02B5/26, G02B5/28

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2002-071903 A (Hoya Corp.),<br>12 March 2002 (12.03.2002),<br>paragraphs [0005] to [0007], [0014] to [0015], [0021]<br>& US 2002/0060848 A1 & EP 1184685 A2<br>& DE 60125479 D & AU 5798901 A<br>& CA 2355021 A & TW 569031 B<br>& AT 349716 T & KR 10-2002-0017997 A<br>& CN 1341866 A & ES 2277876 T<br>& PT 1184685 E & HU 103482 D0 | 1,2<br>3,4,6,8<br>5,7 |
| Y | JP 2004-341052 A (Itoh Optical Industrial Co., Ltd.),<br>02 December 2004 (02.12.2004),<br>claims; paragraphs [0009], [0018]<br>(Family: none) | 3,8 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 January, 2013 (25.01.13) | 05 February, 2013 (05.02.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2012/078120 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2010-072636 A (Seiko Epson Corp.), 02 April 2010 (02.04.2010), paragraphs [0002], [0018] to [0023] (Family: none) | 3,8 |
| Y A | WO 2010/111499 A1 (HIGH PERFORMANCE OPTICS, INC.), 30 September 2010 (30.09.2010), [WHAT IS CLAIM ED IS]; paragraphs [0006], [0021] to [0022], [0163]; fig. 37 (Family: none) | 4,6,8 5,7 |
| Y A | JP 2007-127681 A (Tokai Optical Co., Ltd.), 24 May 2007 (24.05.2007), claims; paragraphs [0018] to [0029]; fig. 1, 2 (Family: none) | 4,6,8 5,7 |
| A | JP 2009-122203 A (Shimadzu Corp.), 04 June 2009 (04.06.2009), paragraphs [0030] to [0031] (Family: none) | 1-5 |
| A | JP 10-160930 A (Nikon Corp.), 19 June 1998 (19.06.1998), paragraph [0005] (Family: none) | 1-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011239622 A
- JP 2011239626 A
- JP 9265059 A
- JP 2002031701 A
- US 2002024705 A1
- US 6863397 B
- JP 4220232 B